# EUROPEAN PATENT SPECIFICATION

(11) **EP 1 145 902 B1**
(45) Date of publication and mention of the grant of the patent: **12.04.2006**
(21) Application number: 00500137.5
(22) Date of filing: 28.06.2000
(51) Int. Cl.: B60J 7/10, B60J 5/06, B60P 7/04

(54) **Holding and tensioning device for an isothermal curtain for carrier vehicles**
Halte- und Spannvorrichtung für einen isothermischen Vorhang für Ladefahrzeuge
Dispositif de maintien et de serrage pour un rideau isothermique pour véhicule transporteur

(30) Priority: 14.04.2000 ES 200001018 U
(43) Date of publication of application: 17.10.2001
(73) Proprietor: Miro Bravo, Vicente, 03800 Alcoy (Alicante) (ES)
(72) Inventor: Miro Bravo, Vicente, 03800 Alcoy (Alicante) (ES)
(74) Representative: Isern-Jara, Jaime

(56) References cited:
- EP-A- 0 569 039
- EP-A- 0 753 422

## Description

### OBJECT OF THE INVENTION

The present invention refers to a holding and tensioning device for an isothermal curtain for carrier vehicles according to the preamble of claim 1. A device of this kind is disclosed in EP 0 753 422.

More particularly, a device has been devised by the new invention which allows the tensioning of a vertical isothermal curtain or canvas by means of a quick holding of the flat hooks being there at the canvas to a flatbar located near the lower edge of the vehicle body side. Said flatbar is tension-controlled by means of a shaft to which it is joined by webbings and which in turn is driven by an endless screw.

### BACKGROUND OF THE INVENTION

Presently at the market several constructions to thermically insulate the walls of the loading area of the refrigerator carrying vehicles are available. The trailers or loading bodies of very many refrigerator vehicles have really their external walls made up with isothermal curtains insulating the inside environment and the loading of the external environment. The isothermal curtains, with a resilient laminar setup, are fitted near the top frame of the body and have the lower edge opened for any access to the body inside. Said curtain lower side is secured by tensioning it to the loading platform lower portion, and by using ropes and/or webbings to avoid any environment exchange between inside and outside by keeping thus alive any inside thermal conditions. Ropes securing said curtains having hooks at their ends with which the tensioning drums or other fitting means are effectively related.

The Spanish Utility Model no. 191 778 shows a typical example of this model.

A drawback of these devices of a sort is that the tensioning is individually performed with each of the belts or the like, so the seals are individual for each of said belts, implying that the work of the curtain tensioning is really time-consuming whereas also a homogeneous tensioning is rather difficult to obtain.

Also is known the Spanish Utility Model no. 95.02256 (corresponding Europeen Application: EP 07 543 422) of the present same applicant, in this model a plurality of webbings or buckle-fitted tensioning bands suitable to be related with a shaft located under the lorry platform is there seen in the canvas at its lower edge. Said shaft rotates by means of an endless screw motion and such in a way that all belts are equally tensioned when screwing on all around. This motion offers homogeneous tensioning and speed, but the operator shall go under the loading platform to work for a webbings fitting at the corresponding supports located alongside the shaft. The work is carried out bent down and handling belt buckles in a distressing and difficult way. Further the whereabouts of said work site to secure the belts are generally very dusty, muddy and/or fully of any other troublesome elements.

Another additional problem is seen when the curtain shall be replaced for another one, because of breakage, natural aging or any other reason whatsoever and the new curtain or canvas shall to be fitted with the same number of belts and spacing equivalent to the prior separation available in the hooks located at the tensioning shaft.

### DESCRIPTION OF THE INVENTION

The holding and tensioning device of an isothermal curtain for carrier vehicles object of the present application, is characterized in that it comprises a motion located under the loading platform along the side where the curtain is fitted and embracing all its length. The device having a shaft which by means of webbings inwardly moves a detachable flatbar arranged along the lower portion of the loading platform. In turn, the isothermal curtain or canvas having at its lower portion a plurality of flat hooks. Said flat hooks are suitable for a quick fitting at said flatbar, whereas a longitudinal backup along all the curtain lower portion embracing the bases of respective webbings is being provided.

The shaft is preferably arranged between two end supports and a central support. In turn, the central support is used as a housing for an endless screw, embedded into a sealed box and having an operating head at its front face suitable for coupling a handle or electric motor, either way.

When operating the endless screw, the two side half-shafts rotate by screwing up around a plurality of regularly-spaced webbings or bands. Said webbings are joined at their free end with the longitudinal flatbar close to the external lower edge of the body platform. The flatbar is found fitted at their two ends by some U-wide-shaped supports defining a maximum and minimum distance travel with respect to the platform edge. In this way the hooks located at the curtain are suitable for very easily securing them to the flatbar when the flatbar is located near the edge. When the hooks are secured by operating the endless screw, the shaft winds the webbings by drawing the flatbar inside the platform and the hooks are in turn so stretched thereby causing canvas to be tauten and braced. All this work can be carried out in a simply way from the lorry side and without going under the loading platform because the hooks and the flatbar are very close to their external side.

To complete the following description and with the purpose to help to a better understanding of the invention characteristics, the present description is accompanied by a set of exemplary drawings which figures illustratively and non-exhaustively show the most relevant details of the invention.

### BRIEF DESCRIPTION OF THE DRAWINGS

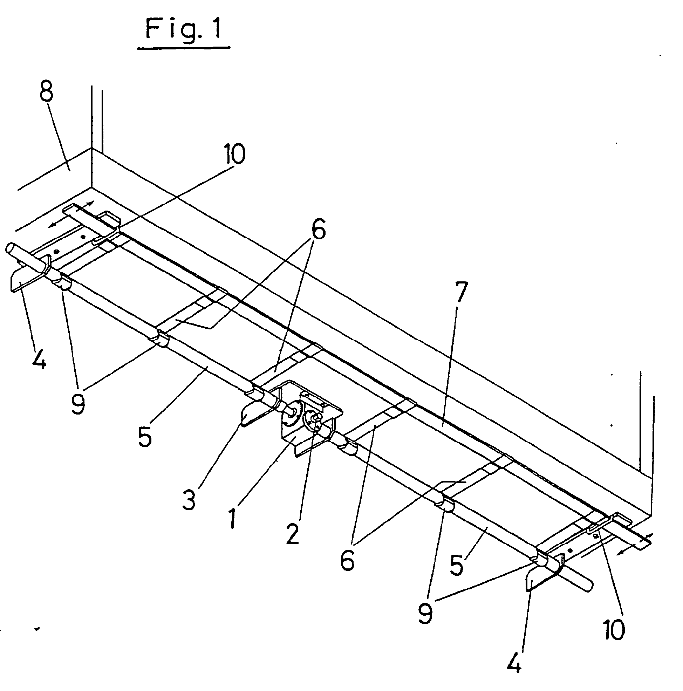

Figure 1 shows a lower perspective view of a tensioning device.

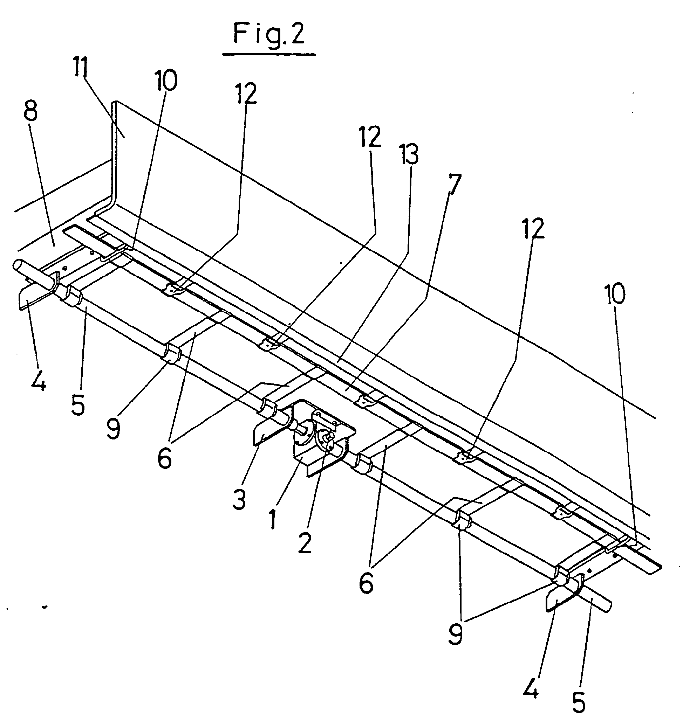

Figure 2 shows a lower perspective view of the device with the curtain tautened.

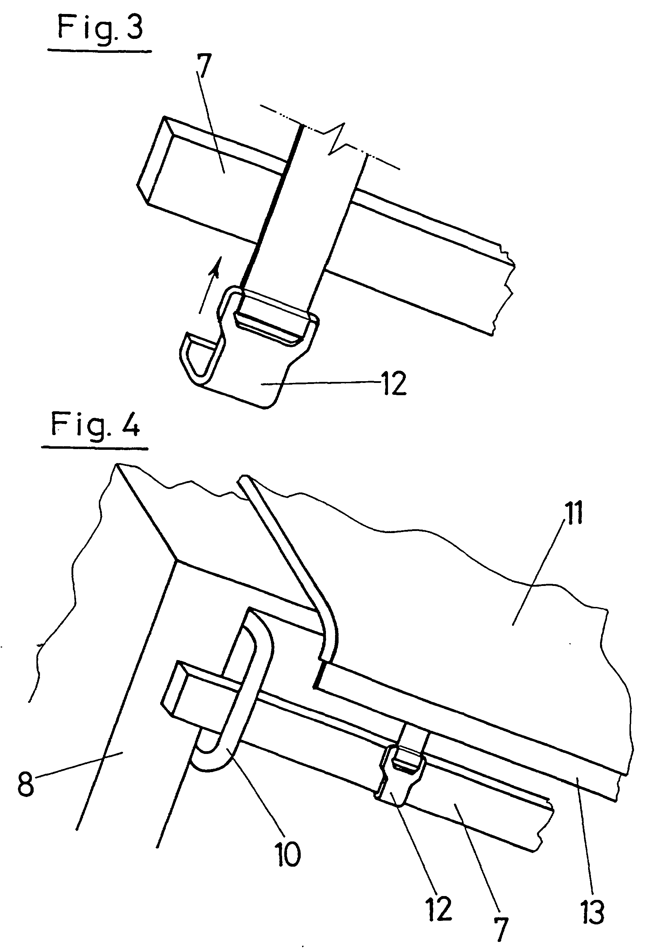

Figure 3 shows a perspective detail of the hook and flatbar.
Figure 4 show a perspective detail of the flatbar support and the flatbar.

### DESCRIPTION OF A PREFERRED EMBODIMENT

In view of the discussed figures and according to the adopted numbering, it can be seen in the figures a preferred embodiment, albeit non-exhaustive of the invention, which comprises a shaft (5) arranged at the side lower portion of the loading platform (8) of a refrigerator vehicle or trailer close to the side where the external insulating curtain (11) is located. Said shaft (5) is located by arranging it along the platform (8) lower portion and fitted by two end supports (4) and a central support (3) which is a housing for an endless screw (1), the latter having a head (2) for coupling to an operating handle or to an electric motor. The shaft (5) having a plurality of stretching bands or webbings (6) regularly distributed alongside and secured to respective fasteners (9), these webbings or bands are respectively joined by their free end to a longitudinal flatbar (7) arranged near the lower edge of the platform (8) and secured by some guides (10) respectively made up with two U-wide-shaped parts joined to the lower portion of the platform (8). At their lower portion the isothermal curtain or canvas (11) having a plurality of flat hooks (12) provided with a short resilient webbing suitable for coupling to the flatbar (7), and a longitudinal backup (13) at the canvas (1) lower fringe embracing the bases of all the hooks is provided.

## Claims

1. HOLDING AND TENSIONING DEVICE OF AN ISOTHERMAL CURTAIN FOR CARRIER VEHICLES of the type made up with a longitudinal shaft (5) arranged at the lower portion of the loading platform (8) of a vehicle or trailer close to the side where said isothermal insulating curtain (11) or canvas is opened and the lower portion is located, this shaft being provided with an operating motion by means of an endless screw (1,2) secured with suitable supports (3, 4), the shaft (5) having a plurality of fasteners (9) regularly distributed over its length, wherein tensioning bands or webbings (6) are provided end-secured to the fasteners, the device being further **characterized in that** the tensioning bands are associated by their opposite free end to a longitudinal flatbar (7) in a parallel arrangement under the loading platform (8) edge and being secured to the platform by two or more guides (10), said shaft (5) being operatively suitable for moving the flatbar (7) all along the guides (10) ; and **in that** the curtain (11) or canvas at its lower edge having a plurality of flat hooks (12), suitable for a quick fastening of the flatbar (7) and operatively susceptible for tensioning said curtain (11) or canvas because of the pulling force exerted by the flatbar (7) when screwing up the webbings (6) on the shaft (5).

2. HOLDING AND TENSIONING DEVICE OF AN ISOTHERMAL CURTAIN FOR CARRIER VEHICLES according to claim 1, **characterized in that** the shaft (5) comprises two substantially equally-long half-shafts respectively secured by two end supports (4) located at the cantilever of the lower portion of the platform (8) and a central support (3) also arranged at said cantilever of the lower portion of the platform (8); and **in that** the central support (3) is a housing for the endless screw (1, 2) in charge of the shaft (5) tensioning rotating motion, said endless screw (1) being embedded within a protecting box and a head (2) suitable for operation by means of a handle or electric motor is projected out therefrom.

3. HOLDING AND TENSIONING DEVICE OF AN ISOTHERMAL CURTAIN FOR CARRIER VEHICLES according to claim 1, **characterized in that** the flatbar (7) is arranged under the platform (8) in a parallel way and substantially close to its side edge and is operatively suitable for a quick fastening of the canvas hooks (12) without requiring the operator going down under the platform (8); and **in that** each of the guides (10) are made up with a U-shaped gauging defining a flatbar (7) travel between two distance positions with respect to the platform (8) external edge these positions being associated with the maximum curtain (11) tensioning operation and with its complete slackening.

4. HOLDING AND TENSIONING DEVICE OF AN ISOTHERMAL CURTAIN FOR CARRIER VEHICLES according to claims 1 and 3, **characterized in that** the hooks (12) located at the curtain (11) lower edge are preferably made up with a J-folded flat sheet associated to the lower selvedge of said curtain (11) by a short webbing, a longitudinal backup (13) of the canvas (11) being located at said lower selvedge.

## Patentansprüche

1. Vorrichtung zum Halten und Spannen eines Kältevorhanges für Transportfahrzeuge der Art, bestehend aus einer im unteren Teil der Ladeplattform (8) eines Fahrzeuges oder Anhängers in der Nähe jener Seite, auf der sich der Kältevorhang oder die Planenabdeckung (11) öffnet und an der der untere Teil dieser angebracht ist, angeordneten Längsachse (5), welche Längsachse (5) durch geeignete Halterungen (3, 4) befestigt, mittels Endlosschnecke (1, 2) zur Betätigung bewegt werden kann, wobei sie über ihre Länge regelmäßig verteilt eine Reihe von Befestigungselementen (9) aufweist, an welchen Spannbänder (6) angeordnet und befestigt sind, weiters **dadurch gekennzeichnet, dass** die Spannbänder mit ihren gegenüberliegenden freien Enden an einer flachen, unterhalb des Randes der Ladeplattform (8) parallel dazu angebrachten und durch zwei oder mehr Führungen (10) an der Plattform fixierten Längsstange (7) angebunden sind, wobei man durch Betätigung dieser Achse (5) die flache Stange (7) entlang der Führungen (10) verschieben kann, und dass der Vorhang bzw. die Plane (11) am unteren Rand eine Reihe flacher Haken (12) aufweist, welche an dieser flachen Stange (7) rasch befestigt werden können und den Vorhang bzw. die Plane (11) durch die von der flachen Stange (7) ausgeübte Zugkraft zu spannen vermögen, wenn die Bänder (6) durch Drehen der Achse (5) angezogen werden.

2. Vorrichtung zum Halten und Spannen eines Kältevorhanges für Transportfahrzeuge nach Anspruch 1, **dadurch gekennzeichnet, dass** die Achse (5) aus zwei im wesentlichen gleich langen Halbachsen besteht, welche durch zwei auf der Unterseite der Plattform (8) vorstehend montierte Endhalterungen (4) und eine ebenfalls auf dieser Unterseite der Plattform (8) vorstehend angeordnete Mittelhalterung (3) fixiert sind, und dass die Mittelhalterung (3) als Aufnahme für eine Endlosschnecke (1, 2) dient, welche die Rotationsbewegung der Spannachse (5) erzeugt, wobei diese Endlosschnecke (1) in einem Schutzgehäuse montiert ist und einen nach außen vorstehenden Spindelstock (2) aufweist, an dem es durch eine Handhabe oder einen Elektromotor betätigt werden kann.

3. Vorrichtung zum Halten und Spannen eines Kältevorhanges für Transportfahrzeuge nach Anspruch 1, **dadurch gekennzeichnet, dass** die flache Stange (7) unterhalb der Plattform (8) paralell zu und sehr nahe dessen seitlichen Randes angeordnet und für die rasche Anbringung der Haken (12) der Plane geeignet ist, ohne dass sich der betreffende Arbeiter unter die Plattform (8) stellen muss, und dass jede der Führungen (10) aus einem U-Profil besteht, welches die Verschiebung der flachen Stange (7) zwischen zwei vom Außenrand der Plattform (8) unterschiedlich weit entfernten Positionen definiert, wobei diese zwei Positionen jeweils dem Zustand maximaler Spannung bzw. vollständiger Entspannung des Vorhanges (11) entsprechen.

4. Vorrichtung zum Halten und Spannen eines Kältevorhanges für Transportfahrzeuge nach den Ansprüchen 1 und 3, **dadurch gekennzeichnet, dass** die Haken (12) am unteren Rand (11) des Vorhanges vorzugsweise als J-förmig gebogenes, flaches Band ausgeführt sind und über ein nicht sehr langes Stoffstück mit dem unteren Rand dieses Vorhanges (11) verbunden sind, wobei an diesem unteren Rand eine Längsverstärkung (13) der Plane bzw. des Vorhanges (11) angebracht ist.

## Revendications

1. Dispositif pour supporter et tendre un rideau isotherme pour les véhicules de transport, du type constitué par un axe longitudinal (5) disposé sur là partie inférieure de la plateforme de charge (8) d'un véhicule ou d'une remorque près du côté sur lequel s'ouvre le rideau isolant isotherme ou la bâche(11) et sur lequel est placée leur partie inférieure, dont l'axe est doté d'un mouvement actionné par une vis sans fin (1,2) fixée sur des supports adéquats (3, 4), l'axe (5) étant pourvu d'une série d'éléments de fixation (9) régulièrement répartis sur toute sa longueur, de sorte que des bandes ou toiles tendeuses (6) soient disposées et fixées sur les éléments de fixation, le dispositif étant en outre **caractérisé par le fait que** les bandes de tension sont reliées sur leurs extrémités libres opposées à une barre longitudinale plane (7) placée parallèlement, sous le bord de la plateforme de charge (8) et fixées à la plateforme par deux guides ou plus (10), cet axe (5) étant opérationnellement approprié pour déplacer la barre plane (7) le long des guides (10) et parce que le rideau ou la bâche (11) a sur son bord inférieur une série de crochets plats (12) appropriés pour la fixation rapide de cette barre plane (7) et susceptibles opérationnellement de tendre ce rideau ou cette bâche (11) par la force de traction exercée par la barre plane (7) quand les bandes ou toiles (6) sont vissées sur l'axe(5).

2. Dispositif pour supporter et tendre un rideau isotherme pour des véhicules de transport, conformément à la revendication 1, **caractérisé par le fait que** l'axe (5) comprend deux demi-axes de longueur substantiellement égale respectivement fixés par deux supports aux extrémités (4) montés en saillie sur la partie inférieure de la plateforme (8) et un support central (3) également monté en saillie sur cette partie inférieure de la plateforme (8) et parce que le support central (3) est un logement pour la vis sans fin (1, 2) destinée à générer le mouvement de rotation de l'axe de tension (5), cette vis sans fin (1) étant montée (1) dans un boîtier de protection avec une tête (2) appropriée pour son actionnement à l'aide d'un manche ou d'un moteur électrique, en saillie à l'extérieur.

3. Dispositif pour supporter et tendre un rideau isotherme pour des véhicules de transport, conformément à la revendication 1, **caractérisé par le fait que** la barre plane (7) est située sous la plateforme (8) parallèlement et très près de son bord latéral, étant opérationnellement appropriée pour la fixation rapide des crochets (12) de la bâche, l'opérateur n'ayant pas à se placer sous la plateforme (8), et parce que chacun des guides (10) est constitué par un profilé en U définissant le déplacement de la barre plane (7) entre deux positions distantes du bord externe de la plateforme (8), dont les positions sont associées au fonctionnement de tension maximale et relâchement complet du rideau (11).

4. Dispositif pour supporter et tendre un rideau isotherme pour des véhicules de transport, conformément aux revendications 1 et 3, **caractérisé par le fait que** les crochets (12) situés sur le bord inférieur (11) du rideau sont constitués, de préférence, sous forme d'une plaque plane pliée en forme de J, reliée au bord inférieur de ce rideau (11) par une toile de faible longueur, un renfort longitudinal (13) étant placé sur ce bord inférieur de la bâche ou du rideau (11).
